# EUROPÄISCHE PATENTSCHRIFT

(11) **EP 3 659 418 B1**
(45) Veröffentlichungstag und Bekanntmachung des Hinweises auf die Patenterteilung: **08.05.2024**
(21) Anmeldenummer: 19401045.0
(22) Anmeldetag: 14.11.2019
(51) Int. Cl.: A01M 7/00, A01C 21/00, A01C 17/00

(54) **VERFAHREN ZUM AUSBRINGEN VON AUSBRINGMATERIAL AUF EINE LANDWIRTSCHAFTLICHE NUTZFLÄCHE**
METHOD FOR APPLYING MATERIAL TO AN AGRICULTURAL AREA
PROCÉDÉ D'ÉPANDAGE D'UN MATÉRIAU D'ÉPANDAGE SUR UNE SURFACE AGRICOLE

(30) Priorität: 29.11.2018 DE 102018130247
(43) Veröffentlichungstag der Anmeldung: 03.06.2020
(73) Patentinhaber: Amazonen-Werke H. Dreyer SE & Co. KG, 49205 Hasbergen (DE)
(72) Erfinder: Austermann, Stefan, 48291 Telgte (DE); Kiefer, Stefan, 49074 Osnabrück (DE); Rahe, Florian, 49504 Lotte (DE); Kühn, Christoph, 49186 Bad Iburg (DE); Dembeck, Achim, 49134 Wallenhorst (DE); Klemann, Timo, 49191 Belm (DE); Heer, Jochen, 49074 Osnabrück (DE)

(56) Entgegenhaltungen:
- EP-A1- 2 132 972
- WO-A1-2015/042540
- US-A- 6 070 539

## Beschreibung

Die Erfindung betrifft ein Verfahren zum Ausbringen von Ausbringmaterial auf eine landwirtschaftliche Nutzfläche nach dem Oberbegriff des Patentanspruchs 1, ein Verfahren zum Bearbeiten einer landwirtschaftlichen Nutzfläche nach dem Oberbegriff des Patentanspruchs 12 und ein landwirtschaftliches Ausbringgerät zum Ausbringen von Ausbringmaterial nach dem Oberbegriff des Patentanspruchs 14.

Auf landwirtschaftliche Nutzflächen wird regelmäßig Ausbringmaterial ausgebracht, beispielsweise um landwirtschaftlichen Nutzpflanzen einen Boden mit geeigneten Nährstoffwerten bereitzustellen. Das Ausbringen von Ausbringmaterial erfolgt dabei zunächst mittels eines ersten landwirtschaftlichen Ausbringgeräts, wie beispielsweise einem Streugerät. Aufgrund der beschränkten Ausbringpräzision bekannter landwirtschaftlicher Ausbringgeräte kommt es üblicherweise in einigen Bereichen der landwirtschaftlichen Nutzfläche zu lokalen Fehlausbringungen. Insbesondere beim Grenz- und/oder Randstreuen müssen Fehlausbringungen des Ausbringmaterials hingenommen werden. Ferner können sich Fehlausbringungen bei Kurvenfahrten oder Geschwindigkeitsveränderungen ergeben. Darüber hinaus können Windböen oder Hanglagen die Ausbringmaterialausbringung beeinflussen und zu Fehlausbringungen führen. Dabei können sich Fehlausbringungen insbesondere auch in Überlappungsbereichen ergeben, in welchen eine Mehrfachausbringung von Ausbringmaterial erfolgt. Ferner können die Fehlausbringungen auch Ausbringlücken betreffen, welche aufgrund der Einstell- und/oder Steuerungsmöglichkeiten des ersten landwirtschaftlichen Ausbringgeräts unvermeidbar sind.

Dabei ist es im Stand der Technik bereits bekannt, Ausbringinformationen zu einem von einem ersten landwirtschaftlichen Ausbringgerät auf einer landwirtschaftlichen Nutzfläche durchgeführten Ausbringvorgang bereitzustellen, beispielsweise um Fahrspurinformationen zu dem von dem ersten landwirtschaftlichen Ausbringgerät durchgeführten Ausbringvorgang in einem Farm-Management-System zu hinterlegen. Ferner ist aus der Druckschrift DE°10 2010 034 215 A1 ein Verfahren zur gleichmäßigen Verteilung von Mineraldünger an Hanglagen bekannt.

Ferner ist aus der US 6 070 539 A bekannt, Ausbringinformationen, insb. betreffend die Ausbringmenge, in eine Istmengenkarte zu überführen, sodass sie für anschließende Ausbringprozesse zur Verfügung stehen.

Diese und andere bekannte Lösungen führen jedoch nicht zu zufriedenstellenden Ausbringergebnissen. Bisher wurde hingenommen, dass in Teilbereichen von landwirtschaftlichen Nutzflächen keine optimale Ausbringmaterialausbringung erfolgt.

Die der Erfindung zugrundeliegende Aufgabe besteht somit darin, die negativen Folgen von Fehlausbringungen zu vermeiden oder zumindest erheblich zu verringern.

Die Aufgabe wird gelöst durch ein Verfahren nach dem kennzeichnenden Teil von Anspruch 1

Die Erfindung macht sich die Erkenntnis zunutze, dass die Ausbringung des Ausbringmaterials während des ersten Ausbringvorgangs nicht beliebig präzise erfolgen kann, sodass eine nachträgliche Ausbringung des Ausbringmaterials nach Abschluss des Ausbringvorgangs des ersten landwirtschaftlichen Ausbringgeräts zu einem besseren Ausbringergebnis führt, als durch eine Steuerung des ersten landwirtschaftlichen Ausbringgeräts erreicht werden kann. Durch das Steuern der Ausbringung des Ausbringmaterials auf die landwirtschaftliche Nutzfläche in Abhängigkeit der bereitgestellten Ausbringinformationen zu dem Ausbringvorgang des ersten landwirtschaftlichen Ausbringgeräts können beispielsweise vermeidbare und/oder unvermeidbare lokale Fehlausbringungen während des Streuens durch das erste landwirtschaftliche Ausbringgerät ausgeglichen beziehungsweise korrigiert werden. Vermeidbar sind Fehlausbringungen beispielsweise dann, wenn für den Ausbringvorgang des ersten landwirtschaftlichen Ausbringgeräts ungeeignete Ausbringeinstellungen an dem ersten landwirtschaftlichen Ausbringgerät vorgenommen wurden. Dies kann beispielsweise zu großflächigen Mehrfachausbringungen, also Überlappungen, oder Ausbringlücken führen, welche dann durch eine nachträgliche Ausbringung des Ausbringmaterials auf die landwirtschaftliche Nutzfläche auszugleichen sind. Unvermeidbar sind beispielsweise Fehlausbringungen im Rand- und/oder Grenzbereich einer landwirtschaftlichen Nutzfläche, insbesondere an der Feldkante oder im Übergang zum Vorgewende. Die Einstellmöglichkeiten bekannter landwirtschaftlicher Ausbringgeräte reichen regelmäßig nicht aus, um auch in den Rand- und/oder Grenzbereichen einer landwirtschaftlichen Nutzfläche die angestrebte Ausbringung realisieren zu können. Durch die nachträgliche Ausbringung des Ausbringmaterials innerhalb der betroffenen Rand- und/oder Grenzbereiche der landwirtschaftlichen Nutzfläche kann die angestrebte Ausbringung erreicht werden.

In einer bevorzugten Ausführungsform des erfindungsgemäßen Verfahrens umfassen die Ausbringinformationen zu dem Ausbringvorgang des ersten landwirtschaftlichen Ausbringgeräts Informationen zu den von dem ersten landwirtschaftlichen Ausbringgerät während des Ausbringvorgangs des ersten landwirtschaftlichen Ausbringgeräts verwendeten Fahrspuren. Auf Grundlage der Fahrspurinformationen können beispielsweise Fehlausbringungen durch das erste landwirtschaftliche Ausbringgerät während der Kurvenfahrt und/oder im Rand- und/oder Grenzbereich der landwirtschaftlichen Nutzfläche erfasst werden. Auf Grundlage der Informationen zu den von dem ersten landwirtschaftlichen Ausbringgerät während des Ausbringvorgangs des ersten landwirtschaftlichen Ausbringgeräts verwendeten Fahrspuren lässt sich auch ableiten, auf welche Art und Weise das Ausbringmaterial im Bereich von feldinternen Hindernissen, wie beispielsweise Bäumen oder Strommasten, ausgebracht wurde. Die sich in diesem Bereich ergebenden Fehlausbringungen während des Ausbringvorgangs des ersten landwirtschaftlichen Ausbringgeräts können dann durch die nachträgliche Ausbringung des Ausbringmaterials entsprechend ausgeglichen werden.

In einer bevorzugten Ausführungsform des erfindungsgemäßen Verfahrens umfassen die Ausbringinformationen zu dem Ausbringvorgang des ersten landwirtschaftlichen Ausbringgeräts Informationen zu den ortspezifischen Ausbringmengen des ersten landwirtschaftlichen Ausbringgeräts beim ersten Ausbringvorgang. Die Ausbringmengen während des ersten Ausbringvorgangs können sich aufgrund von Kurvenfahrten und/oder im Grenz- oder Randbereich lokal voneinander unterscheiden, sodass sich lokale Fehlausbringungen ergeben. Diese lokalen Fehlausbringungen werden dann während des zweiten Ausbringvorgangs berücksichtigt. Beispielsweise können die Fehlausbringungen des ersten Ausbringvorgangs durch den zweiten Ausbringvorgang ausgeglichen werden. Dies kann insbesondere dann der Fall sein, wenn während des ersten Ausbringvorgangs Düngerstreugut ausgebracht wird und während des zweiten Ausbringvorgangs Flüssigdünger ausgebracht wird. Ferner kann eine lokale Ablage von Saatgut während des ersten Ausbringvorgangs bei der nachträglichen Ausbringung von Pflanzenschutzmittel oder Dünger während des zweiten Ausbringvorgangs berücksichtigt werden. Hierbei kann die Pflanzenschutzmittelmenge oder die Düngermenge des zweiten Ausbringvorgangs beispielsweise lokal an den Kornabstand der während des ersten Ausbringvorgangs abgelegten Saatgutkörner angepasst werden.

In einer weiteren vorteilhaften Ausführungsform des erfindungsgemäßen Verfahrens umfassen die Ausbringinformationen zu dem Ausbringvorgang des ersten landwirtschaftlichen Ausbringgeräts Informationen zu den Geräteeinstellungen des ersten landwirtschaftlichen Ausbringgeräts während des Ausbringvorgangs des ersten landwirtschaftlichen Ausbringgeräts. Aus den Geräteeinstellungen kann die Verteilung des Ausbringmaterials ermittelt werden.

Die Geräteeinstellungen des ersten landwirtschaftlichen Ausbringgeräts können beispielsweise die Drehgeschwindigkeit der Schleuderscheiben des ersten landwirtschaftlichen Ausbringgeräts während des Ausbringvorgangs des ersten landwirtschaftlichen Ausbringgeräts, die Aufgabemenge und/oder den Aufgabepunkt des Ausbringmaterials auf die Schleuderscheiben während des Ausbringvorgangs des ersten landwirtschaftlichen Ausbringgeräts umfassen. Alternativ oder zusätzlich können die Geräteeinstellungen des ersten landwirtschaftlichen Ausbringgeräts den Zustand von Leitelementen für das Ausbringmaterial auf den Schleuderscheiben des ersten landwirtschaftlichen Ausbringgeräts betreffen. Der Zustand von Leitelementen für das Ausbringmaterial auf den Schleuderscheiben kann die Position oder die Ausrichtung der Leitelemente betreffen. Aus den Geräteeinstellungen kann beispielsweise die Wurfweite, die Wurfrichtung, die Streubreite und/oder die Ausbringmenge ermittelt werden. Dies erlaubt eine präzise Erfassung von Fehlausbringungen auf der landwirtschaftlichen Nutzfläche, welche durch das nachträgliche Ausbringen des Ausbringmaterials durch ein zweites landwirtschaftliches Ausbringgerät in Abhängigkeit der bereitgestellten Ausbringinformationen zu dem Ausbringvorgang des ersten landwirtschaftlichen Ausbringgeräts ausgeglichen werden können.

In einer Weiterbildung des erfindungsgemäßen Verfahrens umfassen die Ausbringinformationen zu dem Ausbringvorgang des ersten landwirtschaftlichen Ausbringgeräts Informationen zu der Fahrgeschwindigkeit,der Bewegungsgeschwindigkeit, der Fahrtrichtung oder deren Änderungen des ersten landwirtschaftlichen Ausbringgeräts während des Ausbringvorgangs des ersten landwirtschaftlichen Ausbringgeräts. Über die Fahrgeschwindigkeit oder die Bewegungsgeschwindigkeit des ersten landwirtschaftlichen Ausbringgeräts während des Ausbringvorgangs des ersten landwirtschaftlichen Ausbringgeräts können beispielsweise Fehlausbringungen erfasst werden, welche sich aufgrund von beabsichtigten oder unbeabsichtigten Geschwindigkeitsänderungen während des Ausbringvorgangs des ersten landwirtschaftlichen Ausbringgeräts ergeben.

Alternativ oder zusätzlich können die Ausbringinformationen zu dem Ausbringvorgang des ersten landwirtschaftlichen Ausbringgeräts Informationen zur Bewegungsrichtung und/oder zu Änderungen der Bewegungsrichtung des ersten landwirtschaftlichen Ausbringgeräts umfassen. Über die Bewegungsrichtung oder die Änderung der Bewegungsrichtung des ersten landwirtschaftlichen Ausbringgeräts während des Ausbringvorgangs des ersten landwirtschaftlichen Ausbringgeräts können beispielsweise Fehlausbringungen erfasst werden, welche sich aufgrund von beabsichtigten oder unbeabsichtigten Änderungen der Bewegungsrichtung während des Ausbringvorgangs des ersten landwirtschaftlichen Ausbringgeräts ergeben.

Außerdem ist ein erfindungsgemäßes Verfahren bevorzugt, bei welchem die Ausbringinformationen zu dem Ausbringvorgang des ersten landwirtschaftlichen Ausbringgeräts Informationen zu den Eigenschaften, insbesondere der Position, der Topologie und/oder der Geometrie, der landwirtschaftlichen Nutzfläche umfassen. Durch die Position und/oder Geometrie der landwirtschaftlichen Nutzfläche können Feldgrenzen und die Fehlausbringung während des Grenzstreuens erfasst werden. In Kombination mit den Fahrspurinformationen und den Geräteeinstellungen kann eine Fehlausbringung am Vorgewende während des Randstreuens erfasst werden. Über die Topologieinformationen zu der landwirtschaftlichen Nutzfläche können Hanglagen erfasst werden, sodass die durch die Hanglagen verursachten Fehlausbringungen erfasst werden können.

Weiterhin ist ein erfindungsgemäßes Verfahren vorteilhaft, bei welchem die Ausbringinformationen zu dem Ausbringvorgang des ersten landwirtschaftlichen Ausbringgeräts Informationen zu den Umgebungsbedingungen während des Ausbringvorgangs des ersten landwirtschaftlichen Ausbringgeräts umfassen. Die Informationen zu den Umgebungsbedingungen können beispielsweise Informationen zu Windstärke und -richtung während des Ausbringvorgangs des ersten landwirtschaftlichen Ausbringgeräts umfassen. Außerdem können die Informationen zu den Umgebungsbedingungen Informationen zu dem Niederschlag während des Ausbringvorgangs des ersten landwirtschaftlichen Ausbringgeräts umfassen. Außerdem können die Informationen zu den Umgebungsbedingungen während des Ausbringvorgangs des ersten landwirtschaftlichen Ausbringgeräts Temperaturinformationen zu dem Zeitpunkt des Ausbringvorgangs des ersten landwirtschaftlichen Ausbringgeräts umfassen. Auf Grundlage der Informationen zu den Umgebungsbedingungen können somit beispielsweise Fehlausbringungen aufgrund von Windverhältnissen oder Niederschlag erfasst werden.

Darüber hinaus ist ein erfindungsgemäßes Verfahren bevorzugt, bei welchem auf Grundlage der bereitgestellten Ausbringinformationen Bereiche identifiziert werden, in denen das Ausbringergebnis des durchgeführten Ausbringvorgangs des ersten landwirtschaftlichen Ausbringgeräts von einem Zielergebnis abweicht. Die Ausbringung des Ausbringmaterials durch das zweite landwirtschaftliche Ausbringgerät auf die landwirtschaftliche Nutzfläche wird vorzugsweise derart gesteuert, dass Ausbringmaterial, insbesondere nur, lokal in den identifizierten Bereichen ausgebracht wird. Durch die lokale Ausbringung des Ausbringmaterials auf der landwirtschaftlichen Nutzfläche können identifizierte Fehlausbringungen während des Ausbringvorgangs des ersten landwirtschaftlichen Ausbringgeräts effektiv ausgeglichen werden, wobei gleichzeitig eine unnötige Ausbringung von Ausbringmaterial auf nicht betroffene Teilflächen der landwirtschaftlichen Nutzfläche vermieden wird. Die Gesamtmenge an Ausbringmaterial, welches zum Ausgleich der identifizierten Fehlausbringungen notwendig ist, wird auf diese Weise erheblich verringert.

In einer weiteren Ausführungsform des erfindungsgemäßen Verfahrens betreffen die identifizierten Bereiche Flächenabschnitte der landwirtschaftlichen Nutzfläche, auf welche eine zu geringe Menge an Ausbringmaterial in Bezug auf eine Zielmenge an Ausbringmaterial oder kein Ausbringmaterial während des Ausbringvorgangs des ersten landwirtschaftlichen Ausbringgeräts ausgebracht wurde. Wenn eine zu geringe Menge an Ausbringmaterial oder kein Ausbringmaterial während des Ausbringvorgangs des ersten landwirtschaftlichen Ausbringgeräts auf einzelne Flächenabschnitte ausgebracht wurde, kann eine Korrekturdurch eine nachträgliche Ausbringung von Ausbringmaterial auf die betroffenen Flächenabschnitte durch das zweite landwirtschaftliche Ausbringgerät in Abhängigkeit der bereitgestellten Ausbringinformationen zu dem Ausbringvorgang des ersten landwirtschaftlichen Ausbringgeräts erfolgen.

Das erfindungsgemäße Verfahren wird ferner dadurch vorteilhaft weitergebildet, dass das Steuern der Ausbringung des Ausbringmaterials auf die landwirtschaftliche Nutzfläche durch das zweite landwirtschaftliche Ausbringgerät in Abhängigkeit der bereitgestellten Ausbringinformationen zu dem Ausbringvorgang des ersten landwirtschaftlichen Ausbringgeräts das Steuern der Ausbringmenge an Ausbringmaterial von einzelnen Ausbringelementen oder einer Gruppe von Ausbringelementen und/oder das Steuern einer Zusammensetzung des auszubringenden Ausbringmaterials umfasst. Insbesondere ist das Ausbringmaterial als Flüssigkeit, beispielsweise als Flüssigdünger, ausgebildet. Wenn das zweite landwirtschaftliche Ausbringgerät einen Vorratstank mit einem vorgemischten Ausbringmaterial umfasst, ist es vorteilhaft, die Ausbringmenge des vorgemischten Ausbringmaterials während der Ausbringung des Ausbringmaterials auf die landwirtschaftliche Nutzfläche zu steuern. Wenn das zweite landwirtschaftliche Ausbringgerät über ein Direkteinspeisesystem verfügt, kann alternativ oder zusätzlich zu der Ausbringmenge an Ausbringmaterial die Zusammensetzung des auszubringenden Ausbringmaterials gesteuert werden. Die Zusammensetzung des Ausbringmaterials kann beispielsweise durch eine Anpassung des Wirkstoffanteils verändert werden, insbesondere, wenn das Ausbringmaterial Flüssigdünger ist. Auf diese Weise kann die Wirkstoffkonzentration des Flüssigdünger angepasst werden. Mit beiden Varianten lassen sich identifizierte Fehlausbringungen während des Ausbringvorgangs des ersten landwirtschaftlichen Ausbringgeräts effektiv ausgleichen.

Außerdem ist ein erfindungsgemäßes Verfahren bevorzugt, bei welchem das Steuern der Ausbringmenge an Ausbringmaterial von einzelnen Ausbringelementen oder einer Gruppe von Ausbringelementen über eine Pulsweitenmodulation oder eine Pulsweitenfrequenzmodulation an den einzelnen Ausbringelementen oder der Gruppe von Ausbringelementen erfolgt. Vorzugsweise erfolgt eine düsenspezifische Ausbringmengenregelung mittels Pulsweitenmodulation oder Pulsweitenfrequenzmodulation. Vorzugsweise umfasst das zweite landwirtschaftliche Ausbringgerät ein Schaltungssystem, mit welchem einzelne Ausbringelemente oder Gruppen von Ausbringelementen aktiviert und deaktiviert werden können, wobei darüber hinaus über eine Pulsweitenmodulation oder eine Pulsweitenfrequenzmodulation die Durchflussrate durch die einzelnen schaltbaren Ausbringelemente oder die Gruppen von Ausbringelementen gesteuert werden kann. Das Steuern der Ausbringung des Ausbringmaterials auf die landwirtschaftliche Nutzfläche durch das zweite landwirtschaftliche Ausbringgerät in Abhängigkeit der bereitgestellten Ausbringinformationen zu dem Ausbringvorgang des ersten landwirtschaftlichen Ausbringgeräts kann außerdem das Steuern der Ausbringcharakteristik von einzelnen Ausbringelementen oder Gruppen von Ausbringelementen umfassen. Die Ausbringcharakteristik kann dabei beispielsweise die Form und/oder Größe eines Sprühfächers eines Ausbringelements oder einer Gruppe von Ausbringelementen betreffen.

Außerdem ist ein erfindungsgemäßen Verfahren bevorzugt, bei welchem das erste landwirtschaftliche Ausbringgerät als landwirtschaftliches Streugerät, insbesondere als Düngerstreuer, ausgebildet ist, wobei der von dem ersten landwirtschaftlichen Ausbringgerät durchgeführte Ausbringvorgang ein Streuvorgang und das Ausbringmaterial Streugut, insbesondere Düngerstreugut, ist. Beim Streuen von Streugut ergeben sind während Kurvenfahrten oder im Grenz- und/oder Randbereich regelmäßig lokale Fehlausbringungen. Diese lokalen Fehlausbringungen während des ersten Ausbringvorgangs können dann im zweiten Ausbringvorgang berücksichtigt werden.

Ferner ist ein erfindungsgemäßes Verfahren vorteilhaft, bei welchem das zweite landwirtschaftliche Ausbringgerät als landwirtschaftliches Spritzgerät, insbesondere als Feldspritze, ausgebildet ist, wobei das von dem zweiten landwirtschaftlichen Ausbringgerät ausgebrachte Ausbringmaterial eine Flüssigkeit, insbesondere ein Flüssigdünger, ist. Wenn das zweite landwirtschaftliche Ausbringgerät als landwirtschaftliches Spritzgerät ausgebildet ist, können lokale Fehlausbringungen durch ein landwirtschaftliches Streugerät, wie etwa einem Düngerstreuer, effektiv und präzise ausgeglichen werden.

In einer weiteren Ausführungsform des erfindungsgemäßen Verfahrens ist das erste landwirtschaftliche Ausbringgerät als Sämaschine ausgebildet, wobei der von dem ersten landwirtschaftlichen Ausbringgerät durchgeführte Ausbringvorgang ein Sävorgang und das Ausbringmaterial Saatgut ist. Insbesondere umfasst das Verfahren das Erfassen einer Vorgewendefahrspur, insbesondere während des Ausführens des ersten Ausbringvorgangs. Das Erfassen der Vorgewendefahrspur umfasst vorzugsweise das Aufzeichnen und/oder Auswerten der Positionsveränderung des ersten landwirtschaftlichen Ausbringgeräts während des ersten Ausbringvorgangs und/oder das Aufzeichnen und/oder Auswerten der Geräteeinstellungen des ersten landwirtschaftlichen Ausbringgeräts während des ersten Ausbringvorgangs. Aus der Positionsveränderung und den Geräteeinstellungen lassen sich Fahrspurinformationen extrahieren. Außerdem lässt sich aus der Positionsveränderung und den Geräteeinstellungen die Saatgutverteilung auf der landwirtschaftlichen Nutzfläche erfassen. Durch Auswertung der extrahierten Fahrspuren können Vorgewendefahrspuren erfasst werden, welche im Wesentlichen quer zu Fahrspuren im Feldinneren verlaufen. Im Bereich des Vorgewendes erfolgt regelmäßig eine Fehlablage von Saatgut. Diese Fehlablage kann dann beim zweiten Ausbringvorgang durch das zweite landwirtschaftliche Ausbringgerät berücksichtigt werden. In diesem Fall ist es vorteilhaft, wenn das zweite landwirtschaftliche Ausbringgerät als landwirtschaftliches Streugerät, insbesondere als Düngerstreuer, ausgebildet ist, wobei das von dem zweiten landwirtschaftlichen Ausbringgerät ausgebrachte Ausbringmaterial Streugut, insbesondere Düngerstreugut, ist. Bei der Ausbringung des Streuguts kann dann die lokale Ablage von Saatgut berücksichtigt werden.

In einer weiteren Ausführungsform kann das zweite Ausbringgerät als landwirtschaftliches Spritzgerät, insbesondere als Feldspritze, ausgebildet sein.

In einer weiteren Ausführungsform des erfindungsgemäßen Verfahrens sind das erste landwirtschaftliche Ausbringgerät und das zweite landwirtschaftliche Ausbringgerät jeweils als landwirtschaftliches Spritzgerät, insbesondere als Feldspritze, ausgebildet, wobei die von dem ersten landwirtschaftlichen Ausbringgerät und dem zweiten landwirtschaftlichen Ausbringgerät durchgeführten Ausbringvorgänge Spritzvorgänge eines Flüssigdüngers oder eines Pflanzenschutzmittels sind. Beispielsweise können während des ersten Ausbringvorgangs aufgrund von Umgebungszuständen, wie etwa Windböen oder Hanglagen, und/oder Gerätezuständen, wie etwa horizontalen und/oder vertikalen Gestängebewegungen, lokale Fehlausbringungen auftreten. Diese lokalen Fehlausbringungen können dann durch den zweiten Ausbringvorgang effektiv und präzise ausgeglichen werden.

In einer weiteren Ausführungsform des erfindungsgemäßen Verfahrens sind das erste landwirtschaftliche Ausbringgerät und das zweite landwirtschaftliche Ausbringgerät jeweils als landwirtschaftliches Streugerät, insbesondere als Düngerstreuer, ausgebildet.

Einzelne oder mehrere Verfahrensschritte können durch das erste Ausbringgerät, das zweite Ausbringgerät und/oder ein externes Gerät ausgeführt werden. Die Ausbringinformationen zu dem Ausbringvorgang des ersten landwirtschaftlichen Ausbringgeräts können dem zweiten Ausbringgerät direkt von dem ersten Ausbringgerät bereitgestellt werden. Alternativ oder zusätzlich kann das erste landwirtschaftliche Ausbringgerät die Ausbringinformationen zu dem Ausbringvorgang des ersten landwirtschaftlichen Ausbringgeräts auf einer externen Computereinheit, beispielsweise in einem Cloud-Speicher oder einer mobilen Computereinheit, ablegen, sodass das zweite landwirtschaftliche Ausbringgerät die abgelegten Daten oder einen aus den abgelegten Daten erzeugten Datensatz von der Computereinheit abrufen kann.

Die der Erfindung zugrundeliegende Aufgabe wird ferner durch ein Verfahren zum Bearbeiten einer landwirtschaftlichen Nutzfläche der eingangs genannten Art gelöst, wobei das Ausbringen des Ausbringmaterials durch das Verfahren zum Ausbringen von Ausbringmaterial nach einer der vorstehend beschriebenen Ausführungsformen erfolgt. Hinsichtlich der Vorteile und Modifikationen des erfindungsgemäßen Verfahrens zum Bearbeiten der landwirtschaftlichen Nutzfläche wird zunächst auf die Vorteile und Modifikationen des erfindungsgemäßen Verfahrens zum Ausbringen von Ausbringmaterial auf eine landwirtschaftliche Nutzfläche verwiesen.

In einer bevorzugten Ausführungsform des Verfahrens zum Bearbeiten der landwirtschaftlichen Nutzfläche werden Ausbringinformationen zu dem von dem ersten landwirtschaftlichen Ausbringgerät durchgeführten Ausbringvorgang erfasst, insbesondere durch das erste landwirtschaftliche Ausbringgerät. Beispielsweise zeichnet das erste landwirtschaftliche Ausbringgerät während des Ausbringvorgangs des ersten landwirtschaftlichen Ausbringgeräts Positionsinformationen und/oder Geräteparameter auf, sodass diese Ausbringinformationen bereitgestellt werden können. Die erfassten Ausbringinformationen können dabei die zuvor in Bezug auf das Verfahren zum Ausbringen von Ausbringmaterial beschriebenen Informationen umfassen. Alternativ zu dem ersten landwirtschaftlichen Ausbringgerät können die Ausbringinformationen zu dem von dem ersten landwirtschaftlichen Ausbringgerät durchgeführten Ausbringvorgang auch durch externe Geräte erfasst werden. Beispielsweise werden die Ausbringinformationen zu dem von dem ersten landwirtschaftlichen Ausbringgerät durchgeführten Ausbringvorgang durch flugfähige Aufzeichnungsgeräte erfasst, wie beispielsweise Drohnen. Entsprechende flugfähige Aufzeichnungsgeräte können über Kamerasysteme oder eine andere geeignete Messsensorik zur Aufzeichnung von Ausbringinformationen verfügen.

Die der Erfindung zugrundeliegende Aufgabe wird ferner durch ein landwirtschaftliches Ausbringgerät der eingangs genannten Art gelöst, wobei das landwirtschaftliche Ausbringgerät dazu eingerichtet ist, das Verfahren zum Ausbringen von Ausbringmaterial nach einer der vorstehend beschriebenen Ausführungsformen als zweites landwirtschaftliches Ausbringgerät auszuführen. Hinsichtlich der Vorteile und Modifikationen des erfindungsgemäßen landwirtschaftlichen Ausbringgeräts wird auf die Vorteile und Modifikationen des erfindungsgemäßen Verfahrens zum Ausbringen von Ausbringmaterial verwiesen.

Weitere Einzelheiten der Erfindung sind der Figurenbeschreibung und den Zeichnungen zu entnehmen. Es zeigen
Fig. 1 ein erstes landwirtschaftliches Ausbringgerät beim Ausführen eines Teils des erfindungsgemäßen Verfahrens in einer schematischen Darstellung; und
Fig. 2 ein zweites landwirtschaftliches Ausbringgerät beim Ausführen eines Teils des erfindungsgemäßen Verfahrens in einer schematischen Darstellung.

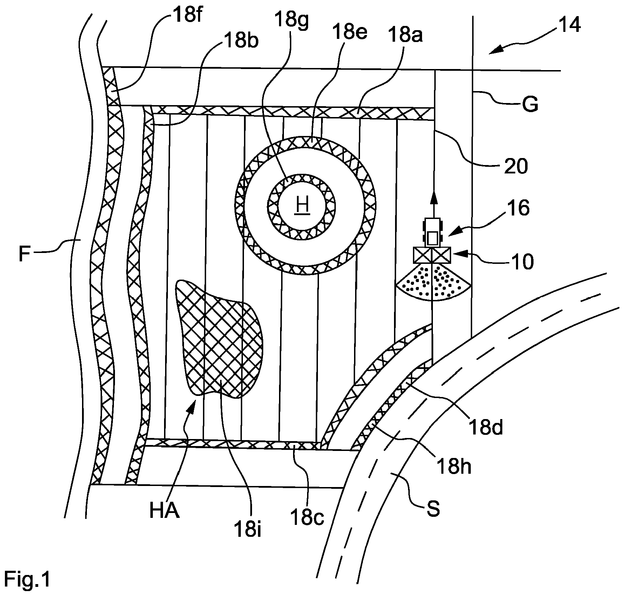

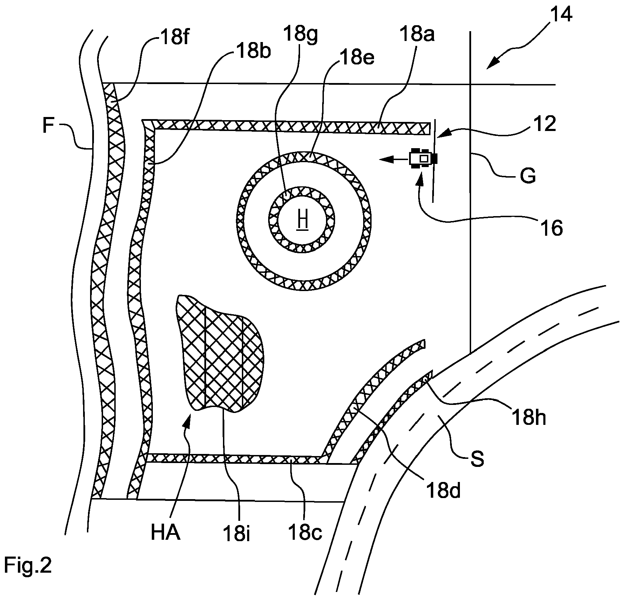

Die Fig. 1 und die Fig. 2 zeigen eine zu düngende landwirtschaftliche Nutzfläche 14. Die landwirtschaftliche Nutzfläche 14 wird seitlich unter anderem von einem Flusslauf F und einer Straße S begrenzt, welche einen Abschnitt der Grenze G der landwirtschaftlichen Nutzfläche 14 vorgeben. Innerhalb der landwirtschaftlichen Nutzfläche 14 ist ein Hindernis H positioniert, wobei das Hindernis H beispielsweise ein Strommast oder ein Baum sein kann. Außerdem weist die landwirtschaftliche Nutzfläche 14 einen Hangabschnitt HA auf.

Die Fig. 1 zeigt das Ausbringen von Ausbringmaterial, nämlich Düngerstreugut, auf die landwirtschaftliche Nutzfläche 14 mittels eines als Streugerät ausgebildeten ersten landwirtschaftlichen Ausbringgeräts 10. Das erste landwirtschaftliche Ausbringgerät 10 ist als Düngerstreuer ausgebildet und weist zwei Schleuderscheiben zum Ausbringen des Ausbringmaterials auf. Das erste landwirtschaftliche Ausbringgerät 10 wird von einem als Traktor ausgebildeten Fahrzeug 16 getragen.

Während des Ausbringvorgangs des ersten landwirtschaftlichen Ausbringgeräts erfasst das erste landwirtschaftliche Ausbringgerät 10 Ausbringinformationen zu dem von dem ersten landwirtschaftlichen Ausbringgerät 10 durchgeführten Ausbringvorgang.

Die von dem ersten landwirtschaftlichen Ausbringgerät 10 erfassten Ausbringinformationen zu dem Ausbringvorgang des ersten landwirtschaftlichen Ausbringgeräts umfassen Informationen zu den von dem ersten landwirtschaftlichen Ausbringgerät 10 während des Ausbringvorgangs des ersten landwirtschaftlichen Ausbringgeräts verwendeten Fahrspuren 20, Informationen zu den Geräteeinstellungen des ersten landwirtschaftlichen Ausbringgeräts 10 während des Ausbringvorgangs des ersten landwirtschaftlichen Ausbringgeräts, Informationen zu der Bewegungsgeschwindigkeit des ersten landwirtschaftlichen Ausbringgeräts 10 während des Ausbringvorgangs des ersten landwirtschaftlichen Ausbringgeräts, Informationen zu den Eigenschaften, nämlich der Position, der Topologie und der Geometrie, der landwirtschaftlichen Nutzfläche 14 und Informationen zu den Umgebungsbedingungen während des Ausbringvorgangs des ersten landwirtschaftlichen Ausbringgeräts.

Die Informationen zu den Geräteeinstellungen des ersten landwirtschaftlichen Ausbringgeräts 10 umfassen Informationen zu der Rotationsgeschwindigkeit der Schleuderscheiben während des Ausbringvorgangs des ersten landwirtschaftlichen Ausbringgeräts, der Aufgabemenge und dem Aufgabepunkt des Ausbringmaterials auf die Schleuderscheiben während des Ausbringvorgangs des ersten landwirtschaftlichen Ausbringgeräts und dem Zustand, nämlich der Position und Ausrichtung, von Leitelementen für das Ausbringmaterial auf den Schleuderscheiben.

Durch Auswerten der erfassten Ausbringinformationen zu dem Ausbringvorgang des ersten landwirtschaftlichen Ausbringgeräts 10 können Bereiche identifiziert werden, in denen das Ausbringergebnis des von dem ersten landwirtschaftlichen Ausbringgerät durchgeführten Ausbringvorgangs von einem Zielergebnis abweicht. Insbesondere erlaubt das Auswerten der erfassten Ausbringinformationen zu dem Ausbringvorgang des ersten landwirtschaftlichen Ausbringgeräts 10 das Erfassen von Flächenabschnitten 18a-18i der landwirtschaftlichen Nutzfläche 14, auf welchen eine zu geringe oder eine zu große Menge an Ausbringmaterial in Bezug auf eine Zielmenge an Ausbringmaterial ausgebracht wurde.

Beispielsweise wurde auf die Flächenabschnitte 18f, 18g, 18h, welche direkt an den Flusslauf F, das Hindernis H und die Straße S angrenzen, eine zu geringe Menge an Ausbringmaterial durch das erste landwirtschaftliche Ausbringgerät 10 ausgebracht, da sonst ein Überwurf auf den Flusslauf F, das Hindernis H und die Straße S nicht vollständig vermieden werden kann. Außerdem wurde in dem Flächenabschnitt 18i innerhalb des Hangabschnitts HA eine zu geringe Menge an Ausbringmaterial durch das erste landwirtschaftliche Ausbringgerät 10 ausgebracht, da die Ausbringung von der Schräglage es ersten landwirtschaftlichen Ausbringgeräts 10 beeinflusst worden ist.

Außerdem kommt es im Übergang zum Vorgewende, also im Bereich der Flächenabschnitte 18a, 18b, 18c, 18d zu Fehlausbringungen des Ausbringmaterials durch das erste landwirtschaftliche Ausbringgerät 10, welche auf Mehrfachausbringungen, also Überlappungen, und Ausbringlücken zurückzuführen sind.

Damit den landwirtschaftlichen Nutzpflanzen über die gesamte landwirtschaftliche Nutzfläche 14 ein möglichst optimaler Boden zur Verfügung gestellt wird, ist eine Nachbehandlung der Flächenabschnitte 18a-18i der landwirtschaftlichen Nutzfläche 14, auf welche eine zu geringe oder eine zu große Menge an Ausbringmaterial in Bezug auf eine Zielmenge an Ausbringmaterial ausgebracht wurde, notwendig.

Die Fig. 2 zeigt das Ausbringen von einem als Flüssigkeit, nämlich als Flüssigdünger, ausgebildeten Ausbringmaterial auf die landwirtschaftliche Nutzfläche 14 mittels eines als Spritzgerät ausgebildeten zweiten landwirtschaftlichen Ausbringgeräts 12. Das zweite landwirtschaftliche Ausbringgerät 12 ist als Feldspritze ausgebildet. Das zweite landwirtschaftliche Ausbringgerät 12 wird von einem als Traktor ausgebildeten Fahrzeug 16 getragen.

Die Ausbringung des Ausbringmaterials durch das zweite landwirtschaftliche Ausbringgerät 12 auf die landwirtschaftliche Nutzfläche 14 wird dabei derart gesteuert, dass das Ausbringmaterial nur lokal in den zuvor identifizierten Bereichen, also den Flächenabschnitten 18a-18i, ausgebracht wird. Eine derartige Steuerung der Ausbringung ist möglich, da die Ausbringinformationen zu dem von einem ersten landwirtschaftlichen Ausbringgerät 10 auf der landwirtschaftlichen Nutzfläche 14 durchgeführten Ausbringvorgang dem zweiten landwirtschaftlichen Ausbringgerät 12 zur Verfügung gestellt werden. In Abhängigkeit der bereitgestelten Ausbringinformationen zu dem Ausbringvorgang des ersten landwirtschaftlichen Ausbringgeräts 10 kann dann die Ausbringung des Ausbringmaterials auf die landwirtschaftliche Nutzfläche 14 durch das zweite landwirtschaftliche Ausbringgerät 12 gesteuert werden. Durch das Steuern der Ausbringung des Ausbringmaterials auf die landwirtschaftliche Nutzfläche 14 in Abhängigkeit der bereitgestellten Ausbringinformationen zu dem Ausbringvorgang des ersten landwirtschaftlichen Ausbringgeräts 10 können vermeidbare und/oder unvermeidbare Fehlausbringungen beim Streuen ausgeglichen bzw. korrigiert werden.

Das Steuern der Ausbringung des Ausbringmaterials auf die landwirtschaftliche Nutzfläche 14 durch das zweite landwirtschaftliche Ausbringgerät 12 in Abhängigkeit der bereitgestellten Ausbringinformationen zu dem Ausbringvorgang des ersten landwirtschaftlichen Ausbringgeräts 10 umfasst dabei das Steuern der Ausbringmenge an Ausbringmaterial von einzelnen Ausbringelementen.

Wenn das zweite landwirtschaftliche Ausbringgerät 12 über ein Direkteinspeisesystem verfügt, kann das Steuern der Ausbringung des Ausbringmaterials auf die landwirtschaftliche Nutzfläche 14 durch das zweite landwirtschaftliche Ausbringgerät 12 in Abhängigkeit der bereitgestellten Ausbringinformationen zu dem Ausbringvorgang des ersten landwirtschaftlichen Ausbringgeräts 10 auch das Steuern der Zusammensetzung, nämlich der Düngerkonzentration, des auszubringenden Ausbringmaterials an einzelnen Ausbringelementen umfassen. Die Ausbringelemente des zweiten landwirtschaftlichen Ausbringgeräts 12 sind Spritzdüsen, deren Ausbringung über Pulsweitenfrequenzmodulation steuerbar ist.

Durch die temporäre und lokale Aktivierung von einzelnen Ausbringelementen kann somit gezielt auf die Flächenabschnitte 18a-18i Ausbringmaterial durch das zweite landwirtschaftliche Ausbringgerät 12 ausgebracht werden, sodass die Abweichung des Ausbringmaterial-Ausbringergebnisses von dem Zielergebnis durch die Ausbringung des Ausbringmaterials korrigiert wird.

### Bezugszeichenliste

- 10: erstes Ausbringgerät
- 12: zweites Ausbringgerät
- 14: landwirtschaftliche Nutzfläche
- 16: Fahrzeug
- 18a-18i: Flächenabschnitt
- 20: Fahrspuren

- F: Flusslauf
- G: Grenze
- H: Hindernis
- HA: Hangabschnitt
- S: Straße

## Patentansprüche

1. Verfahren zum Ausbringen von Ausbringmaterial auf eine landwirtschaftliche Nutzfläche (14), mit den Schritten:
- Bereitstellen von Ausbringinformationen zu einem von einem ersten landwirtschaftlichen Ausbringgerät (10) auf der landwirtschaftlichen Nutzfläche (14) durchgeführten Ausbringvorgang;
- Steuern der Ausbringung des Ausbringmaterials auf die landwirtschaftliche Nutzfläche (14) durch ein zweites landwirtschaftliches Ausbringgerät (12) in Abhängigkeit der bereitgestellten Ausbringinformationen zu dem Ausbringvorgang des ersten landwirtschaftlichen Ausbringgeräts (10); wobei
- das erste landwirtschaftliche Ausbringgerät (10) als landwirtschaftliches Streugerät, wobei der von dem ersten landwirtschaftlichen Ausbringgerät (10) durchgeführte Ausbringvorgang ein Streuvorgang und das Ausbringmaterial Streugut, ist;
- die Ausbringinformationen zu dem Ausbringvorgang des ersten landwirtschaftlichen Ausbringgeräts (10) Informationen zu den Geräteeinstellungen des ersten landwirtschaftlichen Ausbringgeräts (10) während des Ausbringvorgangs des ersten landwirtschaftlichen Ausbringgeräts (10) umfassen;
- wobei aus den Geräteeinstellungen die Verteilung des Ausbringmaterials ermittelt wird, indem aus den Geräteeinstellungen die Wurfweite, die Wurfrichtung und/oder die Streubreite ermittelt werden.

2. Verfahren nach Anspruch 1,
**dadurch gekennzeichnet, dass** die Ausbringinformationen zu dem Ausbringvorgang des ersten landwirtschaftlichen Ausbringgeräts (10) Informationen zu den von dem ersten landwirtschaftlichen Ausbringgerät (10) während des Ausbringvorgangs des ersten landwirtschaftlichen Ausbringgeräts (10) verwendeten Fahrspuren (20) umfassen.

3. Verfahren nach Anspruch 1 oder 2,
**dadurch gekennzeichnet, dass** die Ausbringinformationen zu dem Ausbringvorgang des ersten landwirtschaftlichen Ausbringgeräts (10) Informationen zu den ortspezifischen Ausbringmengen des ersten landwirtschaftlichen Ausbringgeräts (10) beim ersten Ausbringvorgang umfassen.

4. Verfahren nach einem der vorstehenden Ansprüche,
**dadurch gekennzeichnet, dass** die Ausbringinformationen zu dem Ausbringvorgang des ersten landwirtschaftlichen Ausbringgeräts (10) Informationen zu der Fahrgeschwindigkeit oder der Bewegungsgeschwindigkeit des ersten landwirtschaftlichen Ausbringgeräts (10) während des Ausbringvorgangs des ersten landwirtschaftlichen Ausbringgeräts (10) umfassen.

5. Verfahren nach einem der vorstehenden Ansprüche,
**dadurch gekennzeichnet, dass** die Ausbringinformationen zu dem Ausbringvorgang des ersten landwirtschaftlichen Ausbringgeräts (10) Informationen zu den Eigenschaften, insbesondere der Position, der Topologie und/oder der Geometrie, der landwirtschaftlichen Nutzfläche (14) umfassen.

6. Verfahren nach einem der vorstehenden Ansprüche,
**dadurch gekennzeichnet, dass** die Ausbringinformationen zu dem Ausbringvorgang des ersten landwirtschaftlichen Ausbringgeräts (10) Informationen zu den Umgebungsbedingungen während des Ausbringvorgangs des ersten landwirtschaftlichen Ausbringgeräts (10) umfassen.

7. Verfahren nach einem der vorstehenden Ansprüche,
**gekennzeichnet durch** den folgenden Schritt:
- Identifizieren von Bereichen, in denen das Ausbringergebnis des von dem ersten landwirtschaftlichen Ausbringgerät (10) durchgeführten Ausbringvorgangs von einem Zielergebnis abweicht, auf Grundlage der bereitgestellten Ausbringinformationen;
wobei die Ausbringung des Ausbringmaterials durch das zweite landwirtschaftliche Ausbringgerät (12) auf die landwirtschaftliche Nutzfläche (14) vorzugsweise derart gesteuert wird, dass das Ausbringmaterial, insbesondere nur, lokal in den identifizierten Bereichen ausgebracht wird.

8. Verfahren nach Anspruch 7,
**dadurch gekennzeichnet, dass** die identifizierten Bereiche Flächenabschnitte (18a-18i) der landwirtschaftlichen Nutzfläche (14) betreffen, auf welche eine zu geringe Menge an Ausbringmaterial in Bezug auf eine Zielmenge an Ausbringmaterial oder kein Ausbringmaterial während des Ausbringvorgangs des ersten landwirtschaftlichen Ausbringgeräts (10) ausgebracht wurde.

9. Verfahren nach einem der vorstehenden Ansprüche,
**dadurch gekennzeichnet, dass** das Steuern der Ausbringung des Ausbringmaterials auf die landwirtschaftliche Nutzfläche (14) durch das zweite landwirtschaftliche Ausbringgerät (12) in Abhängigkeit der bereitgestellten Ausbringinformationen zu dem Ausbringvorgang des ersten landwirtschaftlichen Ausbringgeräts (10) zumindest einen der folgenden Schritte umfasst:
- Steuern der Ausbringmenge des Ausbringmaterials von einzelnen Ausbringelementen oder einer Gruppe von Ausbringelementen;
- Steuern einer Zusammensetzung des auszubringenden Ausbringmaterials.

10. Verfahren nach Anspruch 9,
**dadurch gekennzeichnet, dass** das Steuern der Ausbringmenge des Ausbringmaterials von einzelnen Ausbringelementen oder einer Gruppe von Ausbringelementen über eine Pulsweitenmodulation oder eine Pulsweitenfrequenzmodulation an den einzelnen Ausbringelementen oder der Gruppe von Ausbringelementen erfolgt.

11. Verfahren nach einem der vorstehenden Ansprüche,
**dadurch gekennzeichnet, dass** das zweite landwirtschaftliche Ausbringgerät (12) als landwirtschaftliches Spritzgerät, insbesondere als Feldspritze, ausgebildet ist, wobei das von dem zweiten landwirtschaftlichen Ausbringgerät (12) ausgebrachte Ausbringmaterial eine Flüssigkeit, insbesondere ein Flüssigdünger, ist.

12. Verfahren zum Bearbeiten einer landwirtschaftlichen Nutzfläche (14), mit den Schritten:
- Ausbringen von Ausbringmaterial auf die landwirtschaftliche Nutzfläche (14) mittels eines ersten landwirtschaftlichen Ausbringgeräts (10); und
- Ausbringen eines Ausbringmaterials auf die landwirtschaftliche Nutzfläche (14) mittels eines zweiten landwirtschaftlichen Ausbringgeräts (12);
**dadurch gekennzeichnet, dass** das Ausbringen des Ausbringmaterials durch das Verfahren zum Ausbringen von Ausbringmaterial nach einem der verstehenden Ansprüche erfolgt.

13. Verfahren nach Anspruch 12,
**gekennzeichnet durch** den Schritt:
- Erfassen von Ausbringinformationen zu dem von dem ersten landwirtschaftlichen Ausbringgerät (10) durchgeführten Ausbringvorgang, insbesondere durch das erste landwirtschaftliche Ausbringgerät (10).

14. Landwirtschaftliches Ausbringgerät (12) zum Ausbringen von Ausbringmaterial, mit
- mehreren Ausbringelementen zum Ausbringen des Ausbringmaterials auf eine landwirtschaftliche Nutzfläche (14), und
- einer Steuerungseinrichtung zum Steuern der Ausbringung des Ausbringmaterials durch die Ausbringelemente,
**dadurch gekennzeichnet, dass** das landwirtschaftliche Ausbringgerät (12) dazu eingerichtet ist, dass Verfahren zum Ausbringen von Ausbringmaterial nach einem der Ansprüche 1 bis 12 als zweites landwirtschaftliches Ausbringgerät (12) auszuführen.

## Claims

1. Method for applying application material to an agricultural area (14), comprising the steps of:
- providing application information regarding an application process carried out by a first agricultural application device (10) on the agricultural area (14);
- controlling the application of the application material on the agricultural area (14) by a second agricultural application device (12) according to the provided application information regarding the application process of the first agricultural application device (10);
wherein
- the first agricultural application device (10) as an agricultural spreading device,
wherein the application process carried out by the first agricultural application device (10) is a spreading process and the application material is spreadable material,
- the application information regarding the application process of the first agricultural application device (10) comprises information about the device settings of the first agricultural application device (10) during the application process of the first agricultural application device (10);
- wherein the distribution of the application material is determined from the device settings by determining the throwing distance, the throwing direction, and/or the spreading width from the device settings.

2. Method according to claim 1,
**characterized in that** the application information regarding the application process of the first agricultural application device (10) comprises information about the tracks (20) used by the first agricultural application device (10) during the application process of the first agricultural application device (10).

3. Method according to claim 1 or claim 2,
**characterized in that** the application information regarding the application process of the first agricultural application device (10) comprises information about the location-specific application quantities of the first agricultural application device (10) during the first application process.

4. Method according to any of the preceding claims,
**characterized in that** the application information regarding the application process of the first agricultural application device (10) comprises information regarding the driving speed or the movement speed of the first agricultural application device (10) during the application process of the first agricultural application device (10).

5. Method according to any of the preceding claims,
**characterized in that** the application information regarding the application process of the first agricultural application device (10) comprises information regarding the properties, in particular the position, the topology, and/or the geometry, of the agricultural area (14).

6. Method according to any of the preceding claims,
**characterized in that** the application information regarding the application process of the first agricultural application device (10) comprises information regarding the ambient conditions during the application process of the first agricultural application device (10).

7. Method according to any of the preceding claims,
**characterized by** the following step:
- identifying regions in which the application result of the application process carried out by the first agricultural application device (10) deviates from a target result on the basis of the application information provided;
wherein the application of the application material by the second agricultural application device (12) to the agricultural area (14) is preferably controlled in such a way that the application material is applied locally, in particularly only locally, in the identified regions.

8. Method according to claim 7,
**characterized in that** the identified regions relate to area portions (18a-18i) of the agricultural area (14), onto which an insufficient amount of application material, in relation to a target quantity of application material, or no application material was applied during the application process of the first agricultural application device (10).

9. Method according to any of the preceding claims,
**characterized in that** controlling the application of the application material to the agricultural area (14) by the second agricultural application device (12) according to the provided application information regarding the application process of the first agricultural application device (10) comprises at least one of the following steps:
- controlling the application quantity of the application material by individual application elements or a group of application elements;
- controlling a composition of the application material to be applied.

10. Method according to claim 9,
**characterized in that** the application quantity of the application material is controlled by individual application elements or a group of application elements via a pulse width modulation or pulse width frequency modulation at the individual application elements or the group of application elements.

11. Method according to any of the preceding claims,
**characterized in that** the second agricultural application device (12) is in the form of an agricultural sprayer, in particular a field sprayer, wherein the application material applied by the second agricultural application device (12) is a liquid, in particular a liquid fertilizer.

12. Method for working an agricultural area (14), comprising the steps of:
- applying application material to the agricultural area (14) by means of a first agricultural application device (10); and
- applying a application material to the agricultural area (14) by means of a second agricultural application device (12);
**characterized in that** the application of the application material takes place by the method for applying application material according to any of the preceding claims.

13. Method according to claim 12,
**characterized by** the step of:
- detecting application information regarding the application process carried out by the first agricultural application device (10), in particular by the first agricultural application device (10).

14. Agricultural application device (12) for applying application material, comprising
- a plurality of application elements for applying the application material to an agricultural area (14), and
- a control means for controlling the application of the application material by the application elements,
**characterized in that** the agricultural application device (12) is configured to carry out the method for applying application material according to any of claims 1 to 12 as a second agricultural device (12).

## Revendications

1. Procédé pour l'épandage de matériau d'épandage sur une surface agricole (14) comportant les étapes consistant à :
- fournir des informations d'épandage concernant un processus d'épandage effectué par un premier appareil d'épandage agricole (10) sur la surface agricole (14) ;
- commander l'épandage du matériau d'épandage sur la surface agricole (14) par un second appareil d'épandage agricole (12) en fonction des informations d'épandage fournies concernant le processus d'épandage du premier appareil d'épandage agricole (10) ;
dans lequel
- le premier appareil d'épandage agricole (10) en tant qu'appareil de dispersion,
le processus d'épandage effectué par le premier appareil d'épandage (10) étant un processus de dispersion et le matériau d'épandage étant un produit de dispersion,
- les informations d'épandage concernant le processus d'épandage du premier appareil d'épandage agricole (10) comprenant des informations concernant les réglages d'appareil du premier appareil d'épandage agricole (10) pendant le processus d'épandage du premier appareil d'épandage agricole (10) ;
- la répartition du matériau d'épandage étant déterminée à partir des réglages d'appareil en ce que la largeur de projection, le sens de projection et/ou la largeur de dispersion sont déterminés à partir des réglages de appareil.

2. Procédé selon la revendication 1,
**caractérisé en ce que** les informations d'épandage concernant le processus d'épandage du premier appareil d'épandage agricole (10) comprennent des informations concernant les trajectoires (20) utilisées par le premier appareil d'épandage agricole (10) pendant le processus d'épandage du premier appareil d'épandage agricole (10).

3. Procédé selon la revendication 1 ou 2,
**caractérisé en ce que** les informations d'épandage concernant le processus d'épandage du premier appareil d'épandage agricole (10) comprennent des informations concernant des quantités d'épandage spécifiques à l'emplacement du premier appareil d'épandage agricole (10) lors du premier processus d'épandage.

4. Procédé selon l'une des revendications précédentes,
**caractérisé en ce que** les informations d'épandage concernant le processus d'épandage du premier appareil d'épandage (10) comprennent des informations concernant l'avancement ou la vitesse de déplacement du premier appareil d'épandage agricole (10) pendant le processus d'épandage du premier appareil d'épandage agricole (10).

5. Procédé selon l'une des revendications précédentes,
**caractérisé en ce que** les informations d'épandage concernant le processus d'épandage du premier appareil d'épandage (10) comprennent des informations concernant les propriétés, en particulier la position, la topologie et/ou la géométrie, de la surface agricole (14).

6. Procédé selon l'une des revendications précédentes,
**caractérisé en ce que** les informations d'épandage concernant le processus d'épandage du premier appareil d'épandage (10) comprennent des informations concernant les conditions environnementales pendant le processus d'épandage du premier appareil d'épandage agricole (10).

7. Procédé selon l'une des revendications précédentes,
**caractérisé par** l'étape suivante de :
- l'identification de zones dans lesquelles le résultat de l'épandage du processus d'épandage effectué par le premier appareil d'épandage agricole (10) s'écarte d'un résultat cible, sur la base des informations d'épandage fournies ;
l'épandage du matériau d'épandage par le second appareil d'épandage agricole (12) sur la surface agricole (14) étant de préférence commandé de telle sorte que le matériau d'épandage est appliqué, en particulier uniquement, localement dans les zones identifiées.

8. Procédé selon la revendication 7,
**caractérisé en ce que** les zones identifiées concernent des sections de surface (18a-18i) de la surface agricole (14) sur lesquelles une quantité trop faible de matériau d'épandage, par rapport à une quantité cible de matériau d'épandage, a été épandue ou sur lesquelles aucun matériau d'épandage n'a été épandu pendant le processus d'épandage du premier appareil d'épandage agricole (10).

9. Procédé selon l'une des revendications précédentes,
**caractérisé en ce que** la commande de l'épandage du matériau d'épandage sur la surface agricole (14) par le second appareil d'épandage agricole (12) en fonction des informations d'épandage fournies concernant le processus d'épandage du premier appareil d'épandage agricole (10) comprend au moins l'une des étapes suivantes de :
- la commande de la quantité d'épandage du matériau d'épandage par des éléments d'épandage individuels ou par un groupe d'éléments d'épandage ;
- la commande d'une composition du matériau d'épandage à épandre.

10. Procédé selon la revendication 9,
**caractérisé en ce que** la commande de la quantité d'épandage du matériau d'épandage par des éléments d'épandage individuels ou par un groupe d'éléments d'épandage a lieu par l'intermédiaire d'une modulation de largeur d'impulsion ou d'une modulation de fréquence de largeur d'impulsion au niveau des éléments individuels d'épandage ou du groupe d'éléments d'épandage.

11. Procédé selon l'une des revendications précédentes,
**caractérisé en ce que** le second appareil d'épandage agricole (12) est conçu comme un appareil de pulvérisation agricole, en particulier comme un pulvérisateur agricole, le matériau d'épandage épandu par le second appareil d'épandage agricole (12) étant un liquide, en particulier un engrais liquide.

12. Procédé pour le traitement d'une surface agricole (14) comportant les étapes consistant à :
- épandre du matériau d'épandage sur la surface agricole (14) à l'aide d'un premier appareil d'épandage agricole (10) ; et
- épandre un matériau d'épandage sur la surface agricole (14) à l'aide d'un second appareil d'épandage agricole (12) ;
**caractérisé en ce que** l'épandage du matériau d'épandage a lieu par le procédé pour l'épandage de matériau d'épandage selon l'une des revendications précédentes.

13. Procédé selon la revendication 12,
**caractérisé par** l'étape de :
- la détection d'informations d'épandage concernant le processus d'épandage effectué par le premier appareil d'épandage agricole (10), en particulier par le premier appareil d'épandage agricole (10).

14. Appareil d'épandage agricole (12) pour l'épandage de matériau d'épandage, comportant
- plusieurs éléments d'épandage pour l'épandage du matériau d'épandage sur une surface agricole (14) et
- un dispositif de commande pour la commande de l'épandage du matériau d'épandage par les éléments d'épandage,
**caractérisée en ce que** l'appareil d'épandage agricole (12) est conçu pour exécuter le procédé pour l'épandage de matériau d'épandage selon l'une des revendications 1 à 12 en tant que second appareil d'épandage agricole (12).
